# EUROPEAN PATENT SPECIFICATION

(11) **EP 2 509 812 B1**
(45) Date of publication and mention of the grant of the patent: **12.11.2014**
(21) Application number: 09840182.1
(22) Date of filing: 11.12.2009
(51) Int. Cl.: B60J 7/06, B61D 39/00

(54) **ACTUATION SYSTEM FOR COVERING CANVAS OF TOP-BODIES**
BETÄTIGUNGSSYSTEM FÜR ABDECKLEINWÄNDE FÜR DIE OBERSEITE EINES FAHRZEUGAUFBAUS
SYSTÈME D'ACTIONNEMENT POUR TOILE DE COUVERTURE DE CORPS SUPÉRIEURS

(43) Date of publication of application: 17.10.2012
(73) Proprietor: Marcolin S.r.l., 33170 Pordenone (IT)
(72) Inventor: DAVIDE, Amato, I-33170 Pordenone (IT)
(74) Representative: Citron, Massimiliano
(86) International application number: PCT/IB2009/055688
(87) International publication number: WO 2011/070400

(56) References cited:
- FR-A- 719 836
- JP-U- 49 095 621
- US-A- 5 005 896

## Description

The invention concerns an actuation system for covering canvas of top-bodies, in particular bodies of heavy vehicles given as an example thereby.

In trucks, see for example EP 1 884 386, a canvas is used to cover a trailer top body. The canvas (see also fig. 1 of EP 1 738 946) is supported by centerings or arches sliding on the side panel of the body which are hauled by a ring of rope, one for each side of the body, actuated by an electric motor. A description of such a rope system can also be wholly seen, for example, in EP 1 738 946.

Each foot of the centerings has a skid mounted on it for better sliding on the side panel. The rope ends are fixed to such a skid, which hauls the first centering and which is actuated by a driving pulley fitted on the shaft of an electric motor.

Not only is the rope system extremely expensive and complex, it is also difficult to mount and maintain. Moreover, the ropes are at the exposed sides of the top-body, vulnerable to weather and/or to unloading/loading means, for example, tipping bodies.

Especially in the field of trucks for transporting material, a problem is therefore that of moving the canvas with improved systems and eliminating the rope system.

JP 49 095621 and US 5 005 896 describe a system of centerings connected by rigid arms two by two hinged to each other at an intermediate point thereof.

By means of a piston (12) the arms are moved and the centerings are spaced or moved closer to each other.

The object of the invention is precisely that of proposing an alternative to conventional actuation systems.

Such a object is obtained with an actuation system as defined in Claim 1.

By kinematic chain it is meant the union of many rigid elements (for example rods, arms, tubes, bars, beams, etc.) obtained with kinematic pairs (preferably hinges or joints), so that, since the relative speed or the motion of a rigid element is fixed with respect to any other one, also the relative speeds or the motion of all the other rigid elements is unambiguously determined. By flat kinematic chain it is meant a chain in which, having any one rigid element fixed, the points of the other rigid elements move on planes parallel to one another (in the embodiments described, in particular, on the same plane).

Preferably the actuation system comprises means for actuating the at least one rigid element. Such actuating means can be a manual actuation system, like a crank or a tie-tope, or an assisted one. In both cases the actuating means can be a permanent part of the actuation system or also added or connected when needed. A linear actuator connected between the at least one rigid element and a centering or another rigid element, for example, can be used as actuating means. Preferably in this case the linear actuator comprises a hydraulic or pneumatic piston fed by an oil or compressed air circuit. This makes it possible to exploit the reservoir and the circuits already present on trucks.

Furthermore, the actuating means can comprise an electric motor, which is mounted on a centering or on a rigid element and is adapted to actuate the at least one rigid element.

It should be noticed that the position of the actuating means is not essential, since they can be on one or more, fixed or movable, centerings, or on the top-body and acting remotely.

The actuation system according to the invention, may involve all the centerings of the top body or subsets thereof, for example to uncover only a part of the top-body at a time. The various groups of centerings actuated according to the invention may have a control which is independent from one another or coordinated, for example, to uncover the entire body by acting simultaneously. Suitable control means, for example an electronic processing unit or a PLC, are advantageous if used for managing the motion of the centerings and if used as controllers of the actuating means.

Preferred solutions for making the moving kinematic chain are the following:
- two centerings of the set are connected to one another by at least two rigid elements, where each rigid element is hinged to a respective centering and the at least two rigid elements are hinged or connected to one another in a point located between the two centerings. This solution is valid for example, for moving only two centerings;
- for each of said at least two rigid elements there is a rigid arm hinged between each of said rigid elements and a movable hinging point guided on one of said at least two centerings. In this way the centerings are more stable and a mechanism which transmits the motion to the subsequent centering is obtained;
- as a variant of motion transmission mechanism, each of the two rigid elements may have a toothing, engaged with the toothing of the other rigid element, so that the motion of the first rigid element is transmitted to the other rigid element through the meshing. Preferably, in order to maximize the thrust generated by the resulting lever, the toothing is at one end of the rigid elements, the same end being hinged to the centering;
- as a further variant of kinematic chain, two centerings of the set may be connected to one another by at least four rigid elements configured in a pantograph-like manner which have a common hinging point on every centering of said two and at least a common hinging point or a connection member located between the two centerings.

It should be noticed that the aforementioned solutions can also be used combined, for a greater stability of the system and/or of the centerings.

It should also be noticed that two rigid elements in the points or at the ends that are between two centerings may be coupled to one another for example, through a connection member or simply through a common hinging point.

In order to avoid that the canvas gets blocked or tangled up in the kinematic chain, the connection member may be exploited, for example a bracket or block, as a support and attachment for the canvas (i.e., the canvas can be fixed on the connection member), so that the canvas is folded or opened out at the connection member when the centerings come closer or move apart, respectively.

In a simple way, two rigid elements can be hinged to the connection member, preferably at their ends, so as to gain opening out stroke for the canvas. With known provisions it is preferable to make sure that the connection member does not rotate when it is pushed by a rigid element to transmit the motion to the next one.

If, on the other hand, two rigid elements have a common hinging point, the connection member may be mounted on this point, or even omitted. In this case the canvas shall thus be directly fixed to the hinging point, for example, with screws or hooks.

In order to avoid the accidental lifting of the canvas, sliding anchoring means can be provided at the feet of the centerings, to anchor the centerings in a slidable manner to the side panel of the top body. For example, sliding skids may be used inside a guide fixed on to the top body, but which cannot be separated from it. A shape-coupling may be used, with a T-shaped guide for example, or a cable may be pulled at the sides of the top body and inserted in holes present in the feet of the centerings. Otherwise, small brackets or hooks may be mounted on the feet of the centerings, better if provided with wheels or bearings, to slidingly anchor them to the side panel, which usually has undercuts or grooves which can be exploited for this purpose. Otherwise, a beam or a guide may be mounted on the top body to which a skid of the centering, or its foot directly, are to be slidingly fixed.

The invention allows the centerings to be packed without fixedly connecting them with a cable ring. It can be thought to make the sliding anchoring means also as means for turning over the centerings as a whole when they are maximally close together and packed at one end of the body. The turning over means can be configured to lift the feet of the centerings from the side panel by making them rotate about an axis parallel to the side panel itself. For example, an end portion of the aforementioned T-shaped guide could be on one side hinged to the top body and to the other free to oscillate, so as to lift the feet of the centerings when all of them are only engaged in such a portion. All this has the advantage of being able to move the pack of centerings far away from the opening of the top body, and to maximize the useful area during loading/unloading operations.

The invention and its advantages shall in any case become clearer by the following description of example embodiments and by the attached drawing, in which:
Fig. 1 shows a 3D view of an actuation system according to the invention with the centerings distant from one another;
Fig. 2 shows a partial 3D view of the actuation system of fig. 1 with the centerings packed up;
Fig. 3 shows a partial 3D view of the actuation system of fig. 1 with the centerings lifted and raised;
Fig. 4 shows a partial enlarged 3D view of the centerings in fig. 1;
Fig. 5 shows an enlarged detail of fig. 4;
Fig. 6 shows a partial enlarged 3D view of the centerings in fig. 2;
Fig. 7 shows an enlarged detail of fig. 6;
Fig. 8 shows an enlarged detail of fig. 4;
Fig. 9 shows an enlarged detail of fig. 4;
Figs. 10-11 show, in a side view, diagrams of variants of the actuation system.

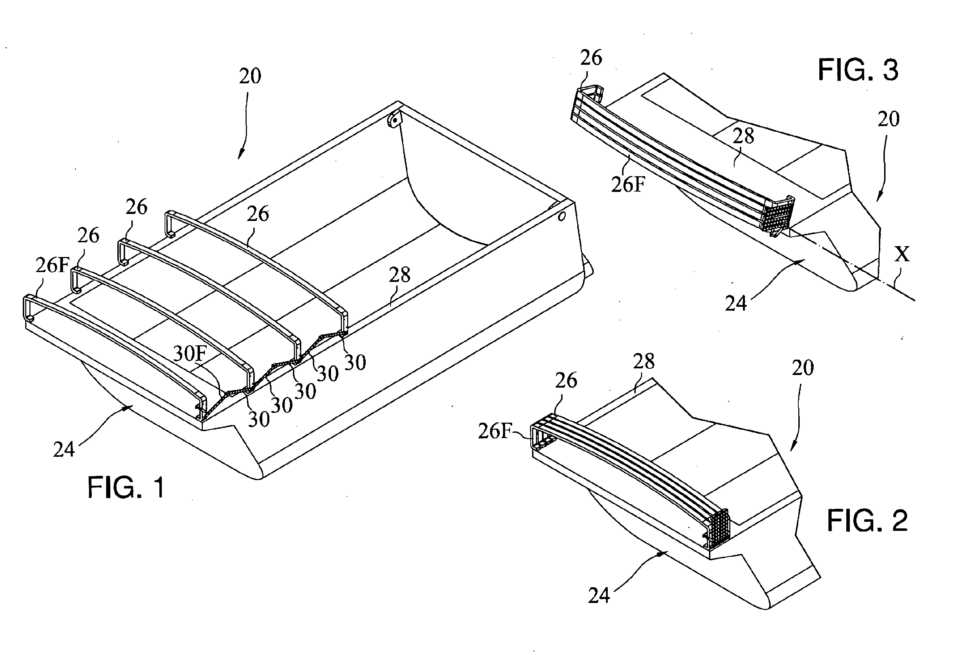

Fig. 1 shows an actuation system 20 in which centerings or arches 26, which can slide on the side panel 28 of the top body 24, support a covering canvas (not shown). As an example only four centerings are shown.

The centerings 26, thanks to a displacement mechanism integrated with the centerings or with the side panel, are mechanically shifted without using a rope ring like in the prior art. The centerings 26 have a C shape with ends curved inwards with respect to the top body 24 to form a foot which can slide on the side panel 28. On the foot, a skid may be mounted (not shown), to help the sliding on the side panel 28.

The centerings 26 are connected by rigid rods 30. On each centering 26, except for the first of the series, indicated with 26F which remains fixed, the ends of two rods 30 are hinged in points 62 hinging about an axis X2 substantially parallel to the plane of the side panel 28. To each of said ends, a toothed wheel 60 is coupled. The points 62 are on a plane parallel to the side panel and the size of the wheels 60 is such as to always ensure a reciprocal meshing. The free end of said two rods 30 is hinged at points 52, 54 to a common block or bracket 50, to which a canvas can be fixed or that in any case supports the canvas. The hinging axis at the points 52, 54 is indicated with X4 and it is parallel to the axis X2.

On the first fixed centering 26F, only a rod 30F and a linear actuator is rotatably mounted at a point 40, about an axis X3 parallel to the axis X2. It is made up of a body 34 from which a mobile piston 36 comes out The piston 36 is hinged to the rod 30F at a point 38, whereas the body 34 is hinged to a spacer plate 32 projecting from the centering 26F. By controlling the stroke of the piston 36, the rod 30F can be moved along the centering 26F.

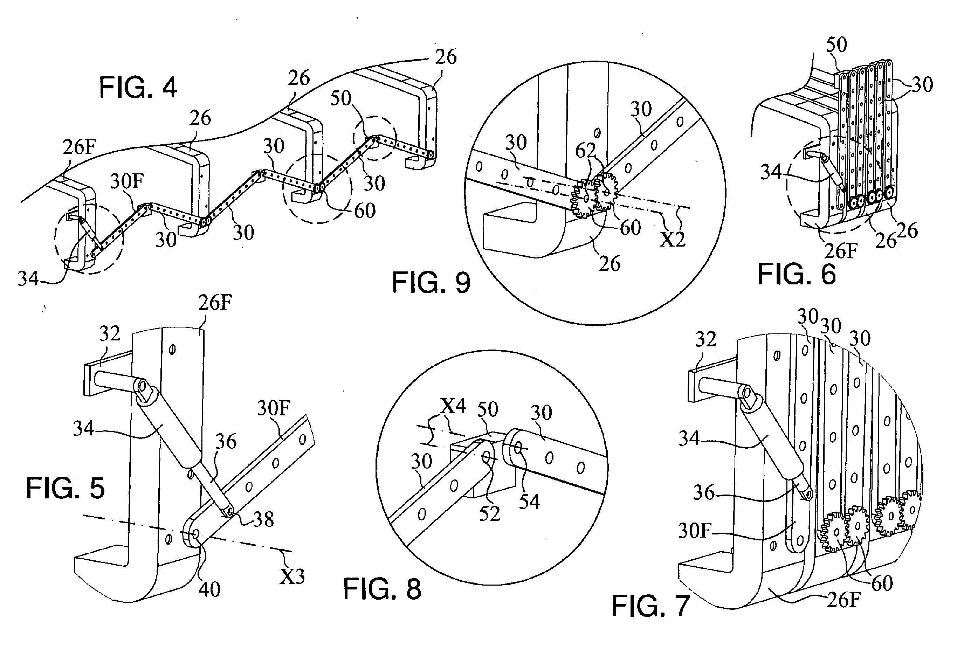

The actuation system 20 works in the following way. From the position in which the canvas is packed (figs. 2, 6 and 7) it moves to the opened out position (figs. 1, 4 5, 8 and 9) actuating the piston 36 in extension which pushes the rod 30F downwards. This causes the closest block 50 to be lowered, pushing downwards the other adjacent rod 30. The separation of the two rods 30F, 30 implies the movement of the centering 26 adjacent to the centering 26F. The rotation of the aforementioned rod 30 induces, through the wheels 60, the lowering of the rod 30 which follows in the series, and so on. Therefore, as the piston 36 gradually extends, the centerings 26 gradually move neatly further apart from the centering 26F pushed by the force transmitted by and to all the rods 30. In order to fold the canvas, it is sufficient to bring the piston 36 back and the centerings shall move in the opposite direction.

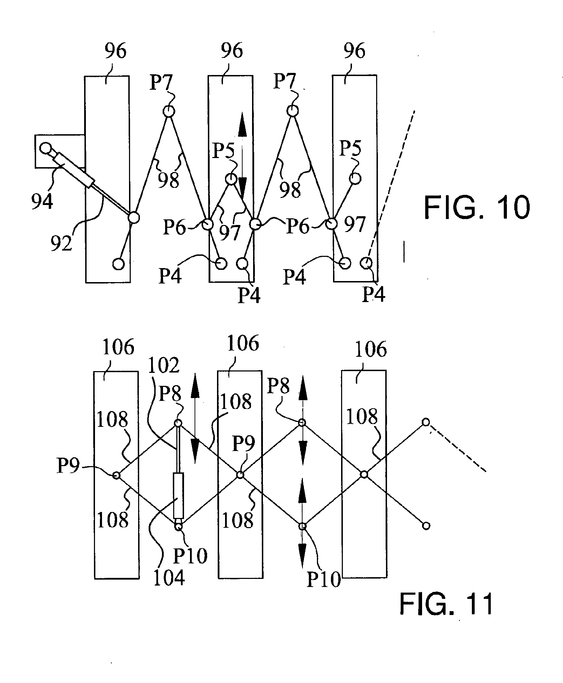

Fig. 11 shows another variant of the system with two rods. At each of three (as an example) centerings 106, two rigid rods 108 are connected through a common hinging point P9. The end of the rods 108 are hinged at the ends of other identical rods at hinging points P8, P10. Between the points P8, P10 there is a linear actuator made up of a body 104 and a mobile piston 102.

This actuation system works as follows. In order to pass from the position of packed canvas to that in which the canvas is opened out, the piston 102 is withdrawn, making the points P8, P10 come closer. Consequently, the rods 108 rotate and come closer to one another pivoting on the point P9, and this also for all the points P8, P10 of each pair of rods 108. By rotating, the rods 108 push the centerings 106 in the point P9 and move them away from one another. In order to fold the canvas, it is sufficient to extend the piston 102, with inverse kinematics for the entire system.

Each of the rods 86 may be fixed, and the others move with respect to it; preferably the one at the end of the series is kept fixed. Moreover, the rods 108 may be replaced by shorter rods, which extend between the points P9-P8 and P9-P10.

Fig. 10 shows another variant of the system, with four rods per centering. At each of three (as an example) centerings 96, two rigid rods 98 are hinged at one end, at hinging points P4. The free ends of the rods 98, are hinged to the ends of other identical rods or arms at hinging points P7. Two shorter rods 97 are hinged at one side to a rod 98 at a point P6 and at the other to the centering 96 in a movable point P5. On the first centering (on the left in fig. 12), which is fixed to the side panel, only a rod 98 is hinged, which can be actuated by a linear actuator made up of a body 94 and a mobile piston 92. The body 94 is hinged to the first centering and the piston is hinged to its only rod 98.

This actuation system works as follows. In order to pass from the position of packed canvas to that in which the canvas is opened out, the piston 92 is extended, making the coupled rod 98 rotate, pushing the adjacent one. The close point P7 lowers and pulls the rod 98 downwards to its right. Simultaneously, the points P6 and P5 are lowered, and this motion is transmitted through the rods 97 to the rods 98 of the next centering, and so on. It can be seen that the rods 97 and the end lower portion of the rods 98 restrained to the centerings 96 form an articulated parallelogram, which at the points P4, P5 pushes the centering 96 and at the points P6 propagates the motion along the entire cascade of rods and centerings towards the right in fig. 12. In order to fold the canvas, it is sufficient to withdraw the piston 92, with reverse kinematics for the entire system.

Two points P5 may also be made, one for each rod 97.

It should be noticed that all the points P4-P10 are hinging points about an axis substantially parallel to the plane of the side panel.

## Claims

1. Actuation system (20) for a canvas for covering an open top-body (24), comprising
- centerings (26; 96; 106) slidable with their own feet on the top of the lateral side panels (28) of the top-body to support and open out/pack the covering canvas, and
- a set of rigid elements (30; 98; 108), operatively coupled with one another and with a set of centerings, configured so as to form a flat kinematic chain adapted to pull the centerings, wherein two centerings of the set are connected to each other by at least two rigid elements (30; 98; 108), where each rigid element is hinged with a respective centering, and the rigid elements are connected so that, by actuating at least one of them, the motion is transmitted to all the centerings of the group and/or to the remaining rigid elements making the centerings of the set come closer together or spread apart, and thereby moving the centerings above the side panel so as to open out/pack the covering canvas,
**characterised in that**
the at least two rigid elements (30; 98; 108) are hinged to one another at an end of theirs, said two hinged ends of the at least two rigid elements being at a point positioned between the two centerings.

2. Actuation system according to claim 1, wherein said two hinged ends (30) of the at least two rigid elements are connected through a connection member (50).

3. Actuation system according to claim 1 or 2, comprising means (34; 94; 104) for actuating the at least one rigid element (30; 98; 108).

4. Actuation system according to claim 3, wherein the means for actuating comprise a linear actuator (34; 94; 104) which is connected between the at least one rigid element and a centering or another rigid element.

5. Actuation system according to claim 4, wherein the linear actuator comprises a hydraulic or pneumatic piston (34; 94; 104) fed by an oil or compressed air circuit.

6. Actuation system according to claim 3, wherein the means for actuating comprise an electric motor, which is mounted on a centering or a rigid element and is adapted to actuate the at least one rigid element.

7. Actuation system according to any one of the previous claims, comprising for each of said at least two rigid elements (98), a rigid arm (97), that is hinged between each of said rigid elements and a movable hinging point (P5) guided on one of said at least two centerings.

8. Actuation system according to claim 7, wherein the hinging point of the two rigid elements on the respective centering is guided in a movable manner on said centering.

9. Actuation system according to any one of the previous claims 1 to 7, wherein each of the two rigid elements (30) has a toothing (60), engaged with the toothing (60) of the other rigid element (30), so that the motion of the first rigid element is transmitted to the other rigid element through meshing.

10. Actuation system according to claim 9, wherein the toothing (60) is present at one end of the rigid elements (30), the same end being hinged to the centering (26).

11. Actuation system according to any one of the previous claims, wherein two centerings (106) of the set are connected to one another by at least four rigid elements (108) configured in a pantograph-like manner which have a common hinging point (P9) on one centering of said two and at least one common hinging point (P8, P10) or a connection member positioned between the two centerings.

12. Actuation system according to any one of the previous claims, wherein the covering canvas is fixed at the common hinging point (50; P7; P8) of two rigid elements, so that the covering canvas is folded or laid out at said point when the centerings come closer together or are spread apart, respectively.

13. Actuation system according to any one of the previous claims 2 to 12, wherein the covering canvas is fixed to the connection member (50) between two rigid elements (30), so that the covering canvas is folded or laid out at said point when the centerings come closer together or are spread apart, respectively.

14. Actuation system according to any one of the previous claims, comprising sliding anchoring means provided at the feet of the centerings for anchoring the centerings in a slidable manner to the side panel of the body.

15. Actuation system according to any one of the previous claims, comprising means for turning over the centerings as a whole when they are maximally close together and packed at one end of the body, said means for turning over being configured to lift the feet of the centerings from the side panel by making them rotate about an axis parallel to the side panel itself.

## Patentansprüche

1. Antrieb (20) für eine Abdeckplane eines Kastens (14) unter freiem Himmel, einschließlich
schiebbarer Rippen (26; 96; 106) mit eigenen Füßen auf der Kuppe der Seitenkanten (28) des Kastens, um die Abdeckplane zu stützen und auszubreiten/einzupacken, und
- einem Satz steifer Elemente (30; 98; 108), die wirksam miteinander gekoppelt sind und einem Satz von Rippen, die konfiguriert wurden, um eine flache kinematische Kette zu formen, um die Rippen zu ziehen, wo zwei Rippen des Satzes durch mindestens zwei steife Elemente miteinander verbunden sind, wo jedes steife Element mit einer entsprechenden Rippe angelenkt ist und
die steifen Elemente so mit einander verbunden sind, dass durch Betätigung mindestens eines der steifen Elemente die Bewegung auf alle Rippen der Gruppe und/oder auf die verbliebenden steifen Elemente übertragen wird und sich die Rippen des Satzes untereinander annähern oder entfernen und die Rippen so über die Seitenkante bewegen, dass sie die Abdeckplane stützen und ausbreiten/einpacken,
**dadurch gekennzeichnet, dass**
mindestens zwei steife Elemente (30; 98; 108) untereinander an einem ihrer Enden angelenkt sind,
sich die besagten beiden Enden, die mit mindestens zwei steifen Elementen angelenkt sind, an einer Stelle zwischen den beiden Rippen befinden.

2. Antrieb gemäß dem Anspruch 1, in dem besagte zwei angelenkte Enden (30) von mindestens zwei steifen Elementen durch ein Verbindungselement (50) verbunden sind.

3. Antrieb gemäß dem Anspruch 1 oder 2, einschließlich Mittel (34; 94; 104) für den Antrieb von mindestens einem der steifen Elemente (30; 98; 108).

4. Antrieb gemäß dem Anspruch 3, in dem die Elemente zum Antrieb ein Linearstellglied (34; 94; 104) umfassen, das zwischen mindestens einem steifen Element und einer Rippe oder einem weiteren steifen Element verbunden ist.

5. Antrieb gemäß dem Anspruch 4, in dem das Linearstellglied einen hydraulischen oder pneumatischen Kolben umfasst (34; 94; 104), der durch einen Öl- oder Druckluftkreislauf betrieben wird.

6. Antrieb gemäß dem Anspruch 3, in dem die Elemente zum Antrieb einen Elektromotor umfassen, der auf einer Rippe oder einem steifen Element montiert ist und zum Antrieb von mindestens einem steifen Element dient.

7. Antrieb gemäß irgendeinem der vorherigen Ansprüche, einschließlich für jedes der besagten mindestens zwei steifen Elemente (98) ein steifer Arm (97), der zwischen jedem der besagten steifen Elemente und einem Gelenkpunkt (P5) angelenkt ist, der beweglich auf einer der besagten mindestens zwei Rippen geführt wird.

8. Antrieb gemäß dem Anspruch 7, in welchem der Gelenkpunkt der beiden steifen Elemente auf der entsprechenden Rippe beweglich auf besagter Rippe geführt wird.

9. Antrieb gemäß irgendeinem der vorherigen Ansprüche, in welchem jedes der beiden steifen Elemente (30) eine Verzahnung (60) aufweist, in Bindung mit der Verzahnung (60) des anderen steifen Elements (30), so dass sich die Bewegung des ersten steifen Elements über die Verzahnung auf das andere steife Element überträgt.

10. Antrieb gemäß dem Anspruch 9, in welchem die Verzahnung (60) an einem Ende der steifen Elemente (30) vorhanden ist, wobei dasselbe Ende an der Rippe (26) angelenkt ist.

11. Antrieb gemäß irgendeinem der vorherigen Ansprüche, in welchem zwei Rippen (106) des Satzes untereinander durch mindestens vier steife Elemente (108) verbunden sind, die mit Laufkatze konfiguriert wurden, die einen gemeinsamen Gelenkpunkt (P9) auf einer Rippe der besagten zwei und mindestens einen gemeinsamen Gelenkpunkt (P8, P10) oder Verbindungselement haben, der sich zwischen den beiden Rippen befindet.

12. Antrieb gemäß irgendeinem der vorherigen Ansprüche, in welchem die Abdeckplane am gemeinsamen Gelenkpunkt (50; P7, P8) von einem der steifen Elemente befestigt ist, so dass die Plane gefaltet oder gedehnt wird, in Entsprechung des besagten Gelenkpunktes, wenn sich die Rippen annähern oder dementsprechend entfernen.

13. Antrieb gemäß irgendeinem der vorherigen Ansprüche von 2 bis 12, in welchem die Abdeckplane am Verbindungselement (50) zwischen zwei steifen Elementen (30) befestigt ist, so dass die Plane gefaltet oder gedehnt wird, in Entsprechung des besagten Gelenkpunktes, wenn sich die Rippen annähern oder dementsprechend entfernen.

14. Antrieb gemäß irgendeinem der vorherigen Ansprüche, einschließlich schiebbare Verankerungselemente auf den Füßen der Rippen, um die Rippen auf schiebbare Weise an der Kante des Kastens zu verankern.

15. Antrieb gemäß irgendeinem der vorherigen Ansprüche, einschließlich Elemente, um die Rippen im Block zu kippen, wenn sie maximal untereinander angenähert und an einem Ende des Kastens verpackt sind, besagte Elemente für das Kippen sind konfiguriert, um die Füße der Rippen von der Kante anzuheben und um sie um eine parallele Achse auf der Kante selbst zu kippen.

## Revendications

1. Actionnement (20) pour une bâche de couverture d'un caisson (14) à ciel ouvert, comprenant
des nervures (26, 96, 106) coulissantes avec leurs propres pieds sur le sommet des ridelles latérales (28) du caisson pour soutenir et étendre/replier la bâche de couverture, et
- un ensemble d'éléments rigides (30, 98, 108), couplés opérationnellement entre eux et à un ensemble de nervures, configurés pour former une chaîne cinématique plate apte à tirer les nervures, où
deux nervures de l'ensemble sont reliées entre elles par au moins deux éléments rigides, où chaque élément rigide est articulé avec une nervure respective, et
les éléments rigides sont reliés de façon à ce que, en actionnant au moins un des éléments rigides, le mouvement soit transmis à toutes les nervures du groupe et/ou aux éléments rigides restants en approchant ou en éloignant entre elles les nervures de l'ensemble, et donc en déplaçant les nervures au-dessus de la ridelle latérale de façon à étendre/replier la bâche de couverture,
**caractérisée par le fait que**
les au moins deux éléments rigides (30, 98, 108) sont articulés l'un avec l'autre à une de leurs extrémités,
lesdites deux extrémités articulées des au moins deux éléments rigides étant à un point placé entre les deux nervures.

2. Actionnement selon la revendication 1, dans lequel lesdites deux extrémités articulées (30) des au moins deux éléments rigides sont reliées par l'intermédiaire d'un organe de raccordement (50).

3. Actionnement selon la revendication 1 ou 2, comprenant des moyens (34, 94, 104) pour actionner l'au moins un des éléments rigides (30, 98, 108).

4. Actionnement selon la revendication 3, dans lequel les moyens pour actionner comprennent un actionneur linéaire (34, 94, 104) qui est raccordé entre l'au moins un élément rigide et une nervure ou un autre élément rigide.

5. Actionnement selon la revendication 4, dans lequel l'actionneur linéaire comprend un piston (34, 94, 104) hydraulique ou pneumatique alimenté par un circuit à huile ou à air comprimé.

6. Actionnement selon la revendication 3, dans lequel les moyens pour actionner comprennent un moteur électrique, qui est monté sur une nervure ou un élément rigide et est apte à actionner l'au moins un élément rigide.

7. Actionnement selon une quelconque des revendications précédentes, comprenant pour chacun desdits au moins deux éléments rigides (98) un bras rigide (97) qui est articulé entre chacun desdits éléments rigides et un point d'articulation (P5) guidé de façon mobile sur une desdites au moins deux nervures.

8. Actionnement selon la revendication 7, dans lequel le point d'articulation des deux éléments rigides sur la nervure respective est guidé de façon mobile sur ladite nervure.

9. Actionnement selon une quelconque des revendications précédentes, dans lequel chacun des deux éléments rigides (30) présente une denture (60), engagée avec la denture (60) de l'autre élément rigide (30), de façon à ce que le mouvement du premier élément rigide se transmette à l'autre élément rigide par l'intermédiaire de l'engrènement.

10. Actionnement selon la revendication 9, où la denture (60) est présente à une extrémité des éléments rigides (30), la même extrémité étant articulée à la nervure (26).

11. Actionnement selon une quelconque des précédentes revendications, dans lequel deux nervures (106) de l'ensemble sont reliées entre elles par au moins quatre éléments rigides (108) configurés en pantographe ayant un point d'articulation en commun (P9) sur une nervure desdites deux et au moins un point d'articulation en commun (P8, P10) ou un organe de raccordement placé entre les deux nervures.

12. Actionnement selon une quelconque des précédentes revendications, dans lequel la bâche est fixée au point d'articulation en commun (50, P7, P8) de deux éléments rigides, de façon à ce que la bâche soit pliée ou étendue en correspondance dudit point lorsque les nervures s'approchent ou s'éloignent, respectivement.

13. Actionnement selon une quelconque des précédentes revendications de 2 à 12, dans lequel la bâche est fixée dans l'organe de raccordement (50) entre deux éléments rigides (30), de façon à ce que la bâche soit pliée ou étendue en correspondance dudit point lorsque les nervures s'approchent ou s'éloignent, respectivement.

14. Actionnement selon une quelconque des précédentes revendications, comprenant des moyens d'ancrage coulissant présents aux pieds des nervures pour fixer les nervures de façon coulissante à la ridelle du caisson.

15. Actionnement selon une quelconque des précédentes revendications, comprenant des moyens pour renverser les nervures en bloc lorsque elles sont approchées au maximum entre elles et repliées à une extrémité du caisson, lesdits moyens pour les renverser étant configurés pour soulever les pieds des nervures de la ridelle en les faisant tourner autour d'un axe parallèle à ladite ridelle.
